# FASCICULE DE BREVET EUROPEEN

(11) **EP 2 347 313 B1**
(45) Date de publication et mention de la délivrance du brevet: **16.07.2014**
(21) Numéro de dépôt: 09744664.5
(22) Date de dépôt: 21.10.2009
(51) Int. Cl.: G05D 16/06

(54) **REGULATEUR POUR SOUTIRAGE DE GAZ CORROSIF EN CONDITION SOUS ATMOSPHERIQUE**
REGLER FÜR ANZAPFUNG KORROSIVEN GASES IN UNTERATMOSPHÄRISCHEN BEDINGUNGEN
REGULATOR FOR CORROSIVE GAS TAPPING IN UNDER-ATMOSPHERIC CONDITIONS

(30) Priorité: 21.10.2008 LU 91490
(43) Date de publication de la demande: 27.07.2011
(73) Titulaire: LUXEMBOURG PATENT COMPANY S.A., 7440 Lintgen (LU)
(72) Inventeur: KREMER, Paul, 7263 Helmsange (LU); MUZZO, Paul, 57970 Yutz (FR); LAMIABLE, Morgan, 54430 Rehon (FR)
(74) Mandataire: Lecomte, Didier
(86) Numéro de dépôt international: PCT/EP2009/063829
(87) Numéro de publication internationale: WO 2010/046409

(56) Documents cités:
- FR-A- 377 817
- US-A- 1 659 263
- US-A- 2 664 674
- US-A- 2 718 237

## Description

### Domaine technique

La présente invention a trait à un dispositif de régulation pour gaz sous pression, plus particulièrement à un dispositif de régulation pour gaz corrosif et/ou toxique sous pression notamment utilisé dans l'industrie des semi-conducteurs et dont le soutirage est préférentiellement opéré en condition de pression sous atmosphérique.

### Etat de la technique antérieure

La plupart des gaz utilisés dans l'industrie des semi-conducteurs sont utilisés à pression constante à un niveau supérieur à la pression atmosphérique mais ils sont généralement débités vers les lignes de production à une pression égale ou inférieure à la pression atmosphérique. Ces gaz sont en effet stockés dans des bouteilles soit par absorption sur un médium solide soit sous pression sous forme gazeuse. Dans le premier cas, il est nécessaire de faire régner une pression sous le niveau atmosphérique dans le haut de la bouteille afin de libérer le gaz absorbé sur le médium. Ceci requiert un dispositif au niveau de la ligne de production apte à générer le vide nécessaire tout en contrôlant le débit amené à la production. Dans le second cas, si on veut pouvoir se connecter au dispositif décrit ci-avant pour les gaz absorbés sur un médium solide, il convient alors d'être à même de réguler la pression et le débit de gaz stocké sous pression lorsque celui-ci est soutiré à une pression inférieure à la pression atmosphérique.

Le type d'application sus mentionné impose d'autres contraintes, à savoir que l'espace disponible pour le dispositif de régulation est limité. En effet, certains standards de format de bouteille ont été développés pour le premier type de stockage de gaz par absorption. Ce type de bouteille comporte une simple vanne au sommet de la bouteille puisque toute la régulation se passe en aval via le dispositif générant le vide et contrôlant le débit. Pour des raisons de sécurité, une coiffe de format standardisé est présente sur le haut des bouteilles afin de protéger la vanne. L'espace réservé à la vanne dans cette coiffe standardisée est assez réduit compte tenu de la simplicité de la vanne à protéger. Dans le cas de gaz stocké sous pression, le dispositif de régulation nécessaire au bon fonctionnement avec les dispositifs de soutirage existants doit pouvoir être logé dans la même coiffe ce qui impose des contraintes d'encombrement.

Le document GB 723,793 (figure 3) divulgue un dispositif de régulation pour gaz apte à maintenir une pression sous atmosphérique lorsque la sortie du dispositif est connectée à une pompe à vide. Ce dispositif comprend un obturateur précontraint dans le sens de la fermeture par un contrepoids ainsi qu'un piston avec une membrane et auquel l'obturateur est attelé. La dépression créée par la pompe à vide côté sortie génère un contre effort sur le piston opposé à la précontrainte du contrepoids. Ce contre effort à pour effet de déplacer le piston et l'obturateur vers le bas dans le sens de l'ouverture. Ce dispositif n'est cependant pas prévu pour être connecté à une source de gaz sous pression. Son design est de plus assez encombrant. Sa membrane est en matériau élastomère, du type caoutchouc par exemple, si bien qu'il n'est pas adapté à réguler des gaz sous haute pression et corrosifs.

Le document EP 0 108 972 divulgue un dispositif de régulation de gaz combustible stocké en phase liquide sous pression. Il comporte un obturateur avec un ressort côté haute pression exerçant un effort de fermeture sur l'obturateur. Ce dernier est en équilibre avec une tige de commande attelée à une membrane, elle-même soumise à un effort élastique opposé. Le principe de ce dispositif permet certes une régulation intéressante mais n'est pas adapté aux gaz corrosifs et/ou toxiques de par, entre autres, la membrane en élastomère.

Le document EP 0 166 826 A1 divulgue un régulateur de gaz sous pression comportant une cartouche dans la partie haute pression. Cette cartouche comporte un obturateur à forme conique et un siège, tous deux coopérants de manière étanche en vue de réguler la pression et/ou le débit à la sortie du régulateur. L'obturateur comporte un téton s'étendant dans la partie basse pression en aval du siège. Ce téton est en contact avec une membrane. Un dispositif de précontrainte réglable exerce un effort sur la face de la membrane opposée au téton de l'obturateur. Ce dispositif permet une régulation précise mais présente des inconvénients au vu de l'application décrite ci-dessus. En effet, la présence de la cartouche rapportée dans la partie haute pression augmente artificiellement la longueur de la partie haute pression et donc du dispositif.

Le document de brevet US1,659,263 divulgue un dispositif de régulation pour gaz sous pression, conforme au préambule de la revendication 1. Les documents de brevet US2,664,674 ; US2,718,237 et FR377.817 divulguent également des dispositif de régulation pour gaz sous pression de constructions similaires.

Face à la contrainte de place disponible réduite, il est courant de prévoir la partie régulation ou détente dans la bouteille même. Cela permet un gain de place effectif au dessus de la bouteille mais présente l'inconvénient majeur qu'il n'est pas aisé d'intervenir sur le régulateur, par exemple à des fins de calibrage et/ou de réglage.

### Exposé de l'invention

L'invention a pour objectif de proposer un dispositif de régulation apte à assurer les services décrits ci-dessus et palliant les inconvénients que présentent les enseignements des documents cités, à savoir un dispositif de régulation pour gaz sous pression, comprenant un corps avec un passage destiné à être connecté à un gaz sous pression ; un obturateur mobile en translation selon un axe et apte à coopérer de manière étanche avec un siège prévu dans le passage; un mouvement de l'obturateur essentiellement dans le sens d'écoulement du fluide correspondant à un mouvement de fermeture du passage ; des premiers moyens élastiques exerçant un effort sur l'obturateur dans le sens de la fermeture du passage; une chambre basse pression en aval du siège et de l'obturateur, la chambre basse pression étant délimitée par une cavité formée dans le corps et par une membrane fixée au corps, la membrane étant apte à se déplacer en fonction de la pression dans ladite chambre et à commander l'obturateur permettant ainsi de réguler dans ladite chambre le débit et/ou la pression du gaz sous pression; les premiers moyens élastiques sont en appui direct sur le fond de la cavité du corps délimitant la chambre basse pression, ledit fond étant essentiellement au niveau du siège ou à un niveau plus bas en amont du siège.

Un tel agencement des moyens élastiques dans la chambre basse pression permet d'utiliser un espace de toute façon disponible et par là d'économiser de la place en aval de l'obturateur. Cet agencement permet également de loger un ressort de plus grand diamètre et plus puissant, contribuant ainsi à rendre l'étanchéité entre l'obturateur et le siège plus sûr. Il permet ainsi de renoncer à une vanne de fermeture au niveau haute pression et donc de gagner en encombrement.

Préférentiellement ladite chambre comprend une pièce mobile en contact avec la membrane et rigidement liée à l'obturateur.

Préférentiellement les premiers moyens élastiques agissent sur la pièce mobile en contact avec la membrane.

Préférentiellement la pièce mobile contacte librement la membrane.

Préférentiellement la pièce mobile est en forme générale de plateau, préférentiellement circulaire, dont une face est en contact libre avec la membrane et l'autre face reçoit les premiers moyens élastiques, l'obturateur étant attelé au plateau.

Préférentiellement l'obturateur comprend une partie allongée en aval du siège dans ladite chambre, cette partie allongée étant filetée et engagée par vissage avec la pièce mobile.

Préférentiellement les premiers moyens élastiques comprennent un premier ressort entourant au moins partiellement l'obturateur.

Préférentiellement le premier ressort en disposé concentriquement par rapport à l'axe de l'obturateur, en appui sur une partie inférieure de la dite chambre selon l'axe de l'obturateur, ladite partie inférieure étant essentiellement au niveau du siège ou à un niveau plus bas en amont du siège.

Préférentiellement le dispositif comprend des seconds moyens élastiques agissant sur la face de la membrane opposée à la pièce mobile.

Préférentiellement le dispositif comprend des moyens de réglage de la force exercée par les seconds moyens élastiques.

Préférentiellement les moyens de réglages sont indexés avec un index correspondant à une précontrainte des second moyens élastiques dans une position de travail du dispositif de régulation.

Préférentiellement les moyens de réglage sont tels qu'ils permettent de diminuer la précontrainte des seconds moyens élastiques de sorte à mettre le dispositif en fermeture.

Préférentiellement le dispositif comprend un second ressort dont une extrémité agit sur la face de la membrane opposée à la pièce mobile et dont l'autre extrémité est en appui sur une butée réglable, la butée étant réglable en déplacement selon l'axe de l'obturateur.

Préférentiellement le dispositif comprend un volant commandant la butée réglable et ayant une position de travail du dispositif de régulation indexée au moyen d'un système mécanique.

Préférentiellement le système d'indexation mécanique comprend un bouton poussoir logé sous une partie essentiellement cylindrique du volant et apte à coopérer avec un orifice de la dite partie essentiellement cylindrique du volant.

### Description sommaire des figures

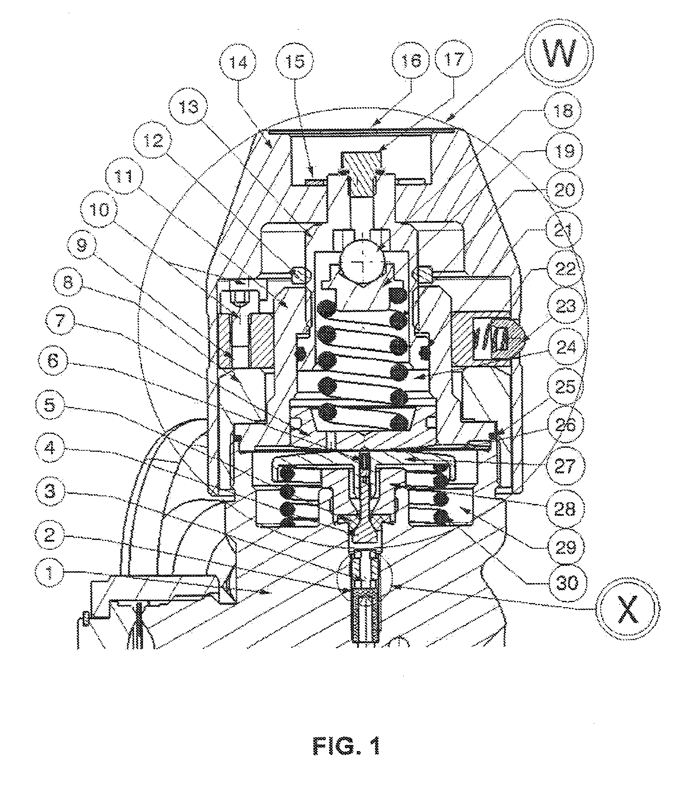

La figure 1 est une vue en coupe de la partie régulation proprement du dispositif selon l'invention.

### Meilleure manière de réaliser l'invention

Dans la suite de la description, les termes indiquant les positions de différents composants du dispositif tels que « supérieur », « inférieur », « haut », « bas », « vertical »,...doivent être interprétés par rapport aux représentations du dispositif selon la figure et non nécessairement par rapport à la position sur l'application. En effet, le dispositif décrit peut être monté dans d'autres positions que celle illustrée dans la figure.

Le dispositif de régulation comprend d'un point de vue fonctionnel, en partant du tube plongeant dans la bouteille, une vanne et un raccord de remplissage de la bouteille, un filtre, un détendeur ou régulateur, une vanne et un raccord de sortie. L'absence de vanne de fermeture en amont du régulateur permet un gain de place selon l'axe principal du dispositif. Le rôle de vanne de fermeture permettant d'isoler de manière sûre la partie basse pression du dispositif de la partie haute pression est assuré par le régulateur, plus particulièrement par son obturateur.

Le régulateur W illustré en coupe à la figure 1 comprend un corps 1 correspondant généralement au corps du dispositif. Dans ce corps est usiné un passage essentiellement selon son axe longitudinal et dans lequel un filtre 2 est logé. Le filtre 2 est un élément cylindrique creux en matériau poreux, typiquement en matériau métallique fritté, dont une extrémité est ouverte et l'autre fermée. Il est logé dans un alésage ménagé dans le perçage du passage. La partie inférieure de cet alésage a un diamètre correspondant essentiellement au diamètre extérieur du filtre alors que le reste de l'alésage, c'est-à-dire la partie supérieure, a un diamètre légèrement supérieur de sorte à créer une chambre autour du filtre. Le filtre en monté par insertion du haut vers le bas selon la figure et est maintenu en place en butée dans le fond de son logement par un élément fileté et creux 3 vissé dans une partie de l'alésage filetée à cet effet. Il est à noter que le diamètre de la partie de cet élément qui est en contact avec le filtre 2 est inférieur à celui de l'alésage dans lequel le filtre et l'élément sont logés de sorte à former une extension de la chambre formée entre le filtre et l'alésage. Des passages latéraux (non visibles) sont prévus au niveau de cette partie inférieure de l'élément 3.

Un obturateur 4 et un siège 5 sont prévus dans le passage en aval du filtre 2. L'obturateur et le siège sont dessinés de sorte à être aptes à assurer une fermeture étanche du passage de gaz. Le siège 5 est positionné dans le passage de gaz en aval du filtre et maintenu par une bague 28 vissée dans un logement fileté du corps 1. Le corps 1 comporte un alésage concentrique au passage central de gaz et forme en aval de l'obturateur 4 coopérant avec le siège 5 une chambre basse pression 29. Cette chambre 29 est délimitée par la cavité formée dans le corps 1 ainsi que par une membrane 26. Celle-ci ferme la cavité du corps de manière étanche, à l'exception d'un passage non représenté connectant la chambre 29 avec la sortie du dispositif.

La chambre basse pression 29 comprend également un plateau 27 auquel l'obturateur 4 est attelé. Un ressort 30 est logé précontraint entre le fond de la cavité du corps et la face inférieure du plateau 27. La partie haute et cylindrique de l'obturateur est filetée et comporte à son extrémité haute une fente en vue de pouvoir coopérer avec un tournevis. Le plateau 27 comporte une partie grossièrement cylindrique selon l'axe longitudinal du dispositif (correspondant à son axe de symétrie) s'étendant vers le bas. Cette partie comporte un perçage traversant selon l'axe longitudinal, ce perçage étant fileté afin de coopérer avec la partie filetée de l'obturateur. Une vis 6 faisant office de contre vis de blocage est prévue en haut de l'extrémité supérieure de l'obturateur 4. Lors du montage, le siège 5 et l'obturateur 4 sont mis en place à partir du haut du corps 1, la bague 28 est ensuite mise en place contre le siège 5. Le ressort 30 et ensuite le plateau 27 sont mis en place en pression et un tournevis adapté est introduit dans le perçage du plateau en vue de coopérer avec la fente de l'extrémité supérieure de l'obturateur 4. L'obturateur est ensuite mis en rotation par le tournevis afin de le visser dans la partie cylindrique creuse du plateau 27. Une fois l'obturateur correctement attelé et positionné par rapport au plateau 27, la contre vis 6 est vissée et bloquée par-dessus l'extrémité supérieure de l'obturateur.

La membrane 26 en matériau métallique est agencée dans un alésage du corps 1 et contacte librement la face supérieure du plateau 27. Un élément supérieur 11 du dispositif en forme de cloche est en contact avec la périphérie de la face supérieure de la membrane 26. Un écrou 8 en appui sur l'élément supérieur 11 est vissé sur le corps 1 afin de mettre la membrane 26 en pression entre le corps 1 et l'élément supérieur 11. Un joint 25 assure l'étanchéité entre ces deux éléments.

L'élément supérieur 11 du dispositif comporte un alésage à sa partie inférieure dans lequel un piston 7 logé de manière coulissante. Ce piston 7 contacte librement la face supérieure de la membrane 26 et est soumis à un effort dirigé vers la membrane par un dispositif de précontrainte réglable. La course décrite par le piston 7 en mode de fonctionnement est faible et correspond essentiellement à celle de la membrane 26 et de l'ensemble plateau/obturateur. Le piston 7 comporte une partie creusée à sa face supérieure apte à recevoir un ressort 20 du dispositif de précontrainte réglable.

L'élément supérieur 11 du dispositif comporte un filetage femelle à sa partie supérieure. Une vis 13 de réglage de la précontrainte est engagée dans le filetage de l'élément supérieur 11. Sa partie supérieure est usinée de sorte à coopérer de manière rigide en rotation avec un volant de commande 14 fixé par des moyens 15. La vis de réglage 13 est creuse à sa partie inférieure. Une bille de contact 18, une pièce intermédiaire 19 et partiellement le ressort 20 sont logés dans cette partie creuse. La manipulation en rotation du volant 14 fait descendre ou monter la vis de réglage 13 et par là agit sur la précontrainte du ressort 20.

Un anneau 9 est glissé sur la partie cylindrique extérieure de l'élément supérieur 11 du dispositif. Cet anneau 9 comporte à sa périphérie un bouton poussoir apte à coopérer avec deux orifices prévus dans le volant 14. Un premier orifice (représenté à la figure 1) correspond à une position où la précontrainte est relâchée et un second orifice décalé à environ ¾ de tour correspond à une position de précontrainte et de travail du dispositif. Le bouton poussoir comprend un bouton 23 proprement dit logé de manière coulissante dans une cavité en forme d'alésage formé dans la surface extérieure de l'anneau 9. Un ressort 22 est logé dans la cavité et pousse le bouton de manière élastique vers l'extérieur. Le bouton est apte à décrire un mouvement radial de translation par rapport à l'anneau 9. L'anneau 9 est réglable angulairement par rapport à l'élément supérieur 11 et est maintenu en position par une vis noyée du type pointeau (non représentée) vissée radialement et exerçant une pression radiale sur la surface extérieure de l'élément supérieur 11.

Deux vis 10 servent de butées mutuelles afin de limiter la rotation du volant dans le sens du dévissage ou montée de la vis 13. Une des ces vis 10 est vissée dans l'anneau 9 et l'autre est vissée dans la cavité du volant 14. La butée assurée par les vis 10 limite la rotation du volant (et donc de la vis 13) dans le sens du dévissage ou montée de la vis au-delà de la position indexée concrétisée par le bouton poussoir et le premier orifice correspondant à une position de relâchement de la précontrainte.

Un écrou 12 est vissé et fixé, soit via un contre écrou soit par collage, sur la vis 13 juste en regard de la partie haute de l'élément supérieur 11 et constitue une butée limitant le vissage ou la descente de la vis 13 au-delà de la position indexée concrétisée par le bouton poussoir et le second orifice correspondant à une position de travail du dispositif.

Le dispositif de régulation décrit comprend deux positions indexées du volant de commande.

La première position (correspondant à la figure 1) où le bouton poussoir engage le premier orifice du volant correspond à un relâchement de l'effort du ressort 20 sur la membrane. Le contre effort agissant via la membrane 26 sur le plateau 27 est au moins partiellement relâché. Une grande partie de l'effort exercé par le ressort 30 sur le plateau est transmis à l'obturateur 4. Cette effort est dirigé vers le haut et tire l'obturateur 4 contre le siège 5 assurant ainsi la fermeture du dispositif. Cette position correspond à un mode dit transport du dispositif. En cas de fuite entre le siège et l'obturateur, la pression dans la chambre basse pression fermée en aval par la vanne augmente et déplace la membrane vers le haut. Ce déplacement relâche d'avantage l'effort de précontrainte et augmente ainsi la part de l'effort du ressort 30 transmise à l'obturateur. Ceci tend à renforcer la fermeture au niveau de l'obturateur et du siège.

Il est préférable que l'obturateur ne soit pas attelé à la membrane car, en cas de fuite, cela aurait pour conséquence que l'augmentation de pression dans la chambre basse pression 29 pourrait exercer des efforts sur l'obturateur tels qu'ils le déformeraient et dérégleraient le régulateur. Dans la configuration de la figure 1, l'effort maximum qui peut être exercé sur l'obturateur est limité à l'effort du ressort 30. Cette limite serait atteinte si la pression dans la chambre 29 aurait pour effet de décoller la membrane du plateau 27.

La seconde position (non représentée) où le bouton poussoir engage le second orifice du volant correspond à une précontrainte calibrée du ressort 20 activant le régulateur en mode de travail. Dans cette position, les efforts des deux ressorts 20 et 30 sont équilibrés en accord avec différents paramètres tels que par exemple la surface de travail de la membrane, les différents frottements et la forme du siège et de l'obturateur, de sorte à obtenir la régulation désirée. En fonction du paramétrage de ces différents éléments, le régulateur obtenu peut être « négatif », c'est-à-dire n'autorisant un débit qu'à des pressions de sortie en dessous du niveau atmosphérique tel que cela est requis pour certaines applications dans l'industrie des semi-conducteurs, ou encore le régulateur peut être « positif », c'est-à-dire autorisant un débit de gaz dans une gamme de pression et/ou de débit de sortie déterminée.

Le dispositif décrit présente l'avantage qu'il ne requiert par de vanne de fermeture côté haute pression, ce rôle étant assuré par l'obturateur du régulateur. La position de travail préréglée du régulateur peut être à tout moment retrouvée grâce au dispositif de commande indexé. Cet agencement permet un gain de place ainsi qu'un accès aisé aux différents éléments de réglage du régulateur, à savoir l'anneau 9 coopérant via le bouton poussoir avec les deux orifices, et l'écrou 12 servant de butée pour la position de travail. Un orifice non représenté est prévu dans le volant afin d'accéder à la vis pointeau (également non représentée) de blocage de l'anneau par rapport à l'élément cloche 11.

La vis de commande 13 comporte à sa partie basse une liaison étanche 21 avec un alésage dans l'élément cloche 11. Le haut de la vis de commande 13 est fermé par une vis 17 et un joint. Une chambre 24 étanche est ainsi formée s'étendant depuis la face supérieure de la membrane 26 jusqu'à la vis 17. De plus, le piston 7 comporte un orifice de liaison entre ses faces supérieure et inférieure. Ces mesures ont pour effet de permettre la surveillance de l'étanchéité de la membrane lorsque le dispositif est en position fermée ou encore dite de transport. En effet, en cas de fuite entre l'obturateur et le siège et également au niveau de la membrane, le gaz remplissant la chambre basse pression 29 fermée à sa sortie par la vanne va se répandre dans la chambre 24. Il suffit alors de connecter la sortie de cette chambre au niveau de la vis 17 à un détecteur de gaz pour détecter une fuite au niveau de la membrane. En position de travail, c'est-à-dire de précontrainte calibrée du ressort 20, la vis 17 doit être retirée afin d'éviter toute pression parasite dans la chambre 24 qui sinon influencerait le comportement du régulateur.

Il est également divulgué un dispositif de régulation pour gaz sous pression comprenant une arrivée de gaz sous pression, un obturateur apte à fermer l'arrivée de gaz sous pression, une chambre basse pression en aval de l'obturateur, la chambre basse pression étant délimitée par une membrane agissant sur l'obturateur en vue de réguler le débit et/ou la pression de gaz sous pression, une chambre auxiliaire étanche délimitée par la face de la membrane opposée à la chambre basse pression apte à être connectée à un détecteur de présence du gaz.

Préférentiellement, le dispositif comporte une vanne de fermeture à la sortie de la chambre basse pression.

Préférentiellement, le dispositif comporte un dispositif de précontrainte réglable de la membrane comprenant la chambre auxiliaire.

Préférentiellement, le dispositif de précontrainte réglable de la membrane comporte une vis de commande de moyens élastiques, la vis de commande coopérant de manière étanche avec un élément fixe en vue de commander les moyens élastiques.

D'autres caractéristiques peuvent être prises de la partie de la description détaillée de la figure 1 relative à la chambre étanche 24.

Il est également divulgué une méthode impliquant un dispositif de régulation tel que défini ci-avant consistant à mettre le dispositif dans un état où l'obturateur ferme l'arrivée de gaz sous pression et à connecter la chambre auxiliaire à un détecteur de présence du gaz. Cette situation correspond typiquement à un mode dit de « transport » où le dispositif est fermé et une fuite éventuelle au niveau de l'obturateur et de la membrane peut être détectée. On pourrait également imaginer cet agencement en service afin de détecter une fuite au niveau de la membrane en fonctionnement.

## Revendications

1. Dispositif de régulation pour gaz sous pression, comprenant un corps (1) avec un passage destiné à être connecté à un gaz sous pression ;
un obturateur (4) mobile en translation selon un axe et apte à coopérer de manière étanche avec un siège (5) prévu dans le passage; un mouvement de l'obturateur (4) essentiellement dans le sens d'écoulement du fluide correspondant à un mouvement de fermeture du passage ;
des premiers moyens élastiques (30) exerçant un effort sur l'obturateur (4) dans le sens de la fermeture du passage;
une chambre basse pression (29) en aval du siège (5) et de l'obturateur (4), la chambre basse pression (29) étant délimitée par une cavité formée dans le corps (1) et par une membrane (26) fixée au corps (1), la membrane (26) étant apte à se déplacer en fonction de la pression dans ladite chambre (29) et à commander l'obturateur (4) permettant ainsi de réguler dans ladite chambre (29) le débit et/ou la pression du gaz sous pression ; les premiers moyens élastiques (30) étant logés dans la chambre basse pression (29);
**caractérisé en ce que** les premiers moyens élastiques (30) sont en appui direct sur le fond de la cavité du corps (1) délimitant la chambre basse pression (29), ledit fond étant essentiellement au niveau du siège (5) ou à un niveau plus bas en amont du siège (5).

2. Dispositif selon l'une des revendications précédentes, **caractérisé en ce que** les premiers moyens élastiques (30) comprennent un premier ressort entourant au moins partiellement l'obturateur (4).

3. Dispositif selon la revendication précédente, **caractérisé en ce que** le premier ressort (30) est disposé concentriquement par rapport à l'axe de l'obturateur (4), en appui sur une partie inférieure de la dite chambre (29) selon l'axe de l'obturateur (4), ladite partie inférieure étant essentiellement au niveau du siège (5) ou à un niveau plus bas en amont du siège (5).

4. Dispositif selon l'une des revendications précédentes, **caractérisé en ce que** l'obturateur (4) comprend une partie allongée en aval du siège (5) dans ladite chambre (29), cette partie allongée étant filetée et engagée par vissage avec une pièce mobile (27) sur laquelle les premiers moyens élastiques (30) agissent.

5. Dispositif selon la revendication précédente, **caractérisé en ce qu'**il comprend des seconds moyens élastiques (20) agissant sur la face de la membrane (26) opposée à la pièce mobile (27).

6. Dispositif selon la revendication précédente, **caractérisé en ce qu'**il comprend des moyens de réglage (13) de la force exercée par les seconds moyens élastiques (20).

7. Dispositif selon la revendication précédente, **caractérisé en ce que** les moyens de réglages (13) sont indexés avec un index correspondant à une précontrainte des seconds moyens élastiques (20) dans une position de travail du dispositif de régulation.

8. Dispositif selon la revendication précédente, **caractérisé en ce que** les moyens de réglage (13) sont tels qu'ils permettent de diminuer la précontrainte des seconds moyens élastiques (20) de sorte à mettre le dispositif en fermeture.

9. Dispositif selon l'une des revendications 6 à 8, **caractérisé en ce que** les moyens de réglages (13) sont indexés avec un index correspondant à une position de fermeture du dispositif où la force exercée par les seconds moyens élastiques est relâchée.

10. Dispositif selon l'une des revendications 1-9, **caractérisé en ce qu'**il comprend un second ressort (20) dont une extrémité agit sur la face de la membrane (26) opposée à une pièce mobile (27) rigidement liée à l'obturateur (4) et dont l'autre extrémité est en appui sur une butée réglable (18, 19), la butée étant réglable en déplacement selon l'axe de l'obturateur (4).

11. Dispositif selon la revendication précédente, **caractérisé en ce qu'**il comprend un volant (14) commandant la butée réglable (18, 19) et ayant une position de travail du dispositif de régulation indexée au moyen d'un système mécanique.

12. Dispositif selon la revendication précédente, **caractérisé en ce que** le système d'indexation comprend une position de fermeture du dispositif où la force exercée par les seconds moyens élastiques sont relâchés.

13. Dispositif selon l'une des revendications 11 et 12, **caractérisé en ce que** le système d'indexation mécanique comprend un bouton poussoir (22, 23) logé sous une partie essentiellement cylindrique du volant (13) et apte à coopérer avec au moins un orifice de la dite partie essentiellement cylindrique du volant (14).

## Patentansprüche

1. Regelvorrichtung für Druckgase, bestehend aus
einem Gehäuse (1) mit einem Durchgang für den Anschluss an einem Druckgas;
einem Verschluss, der sich seitlich entlang einer Achse verschieben lässt und gasdicht mit einem Sitz (5) zusammenwirken kann, der im Durchgang vorgesehen ist; eine Bewegung des Verschlusses (4), die im Wesentlichen in der Fließrichtung des Gases verläuft, entspricht einer Bewegung zum Verschließen des Durchgangs;
ersten elastischen Mitteln (30), die in Richtung des Verschließens des Durchgangs eine Kraft auf den Verschluss (4) ausüben;
einer Niederdruckkammer (29) stromabwärts des Sitzes (5) und des Verschlusses (4), wobei die Niederdruckkammer (29) anhand eines Hohlraums im Gehäuse (1) und einer Membran (26) begrenzt wird, die am Gehäuse (1) befestigt ist, wobei die Membran (26) in der Lage ist, sich je nach dem in der Kammer (29) herrschenden Druck zu bewegen und den Verschluss (4) zu betätigen, um auf diese Weise in der genannten Kammer (29) die Durchflussmenge und/oder den Druck des Druckgases zu regeln; die ersten elastischen Mittel (30) sind dabei in der Niederdruckkammer (29) untergebracht;
**dadurch gekennzeichnet, dass** die ersten elastischen Mittel (30) direkt auf dem Boden des Hohlraums des Gehäuses (1) aufliegen, der die Niederdruckkammer (29) begrenzt, wobei sich der genannte Boden im Wesentlichen auf der Höhe des Sitzes (5) oder auf einem niedrigeren Niveau stromaufwärts des Sitzes (5) befindet.

2. Vorrichtung nach einem der voranstehenden Ansprüche, **dadurch gekennzeichnet, dass** die ersten elastischen Mittel (30) eine erste Feder beinhalten, die den Verschluss (4) mindestens teilweise umgibt.

3. Vorrichtung nach dem voranstehenden Anspruch, **dadurch gekennzeichnet, dass** die erste Feder (30) im Verhältnis zur Achse des Verschlusses (4) konzentrisch angeordnet ist und auf einem unteren Teil der genannten Kammer (29) entlang der Achse des Verschlusses (4) aufliegt, wobei sich der genannte untere Teil im Wesentlichen auf der Höhe des Sitzes (5) oder auf einem niedrigeren Niveau stromaufwärts des Sitzes (5) befindet.

4. Vorrichtung nach einem der voranstehenden Ansprüche, **dadurch gekennzeichnet, dass** der Verschluss (4) einen langgestreckten Teil stromabwärts des Sitzes (5) in der genannten Kammer (29) beinhaltet, wobei dieser langgestreckte Teil ein Gewinde besitzt und mit einem beweglichen Teil (27) aufgeschraubt wird, auf das die ersten elastischen Mittel (30) einwirken.

5. Vorrichtung nach dem voranstehenden Anspruch, **dadurch gekennzeichnet, dass** sie zweite elastische Mittel (20) beinhaltet, die auf die Seite der Membran (26) einwirken, welche dem beweglichen Teil (27) gegenüberliegt.

6. Vorrichtung nach dem voranstehenden Anspruch, **dadurch gekennzeichnet, dass** sie Mittel für die Regelung (13) der Kraft beinhaltet, die anhand der zweiten elastischen Mittel (20) ausgeübt wird.

7. Vorrichtung nach dem voranstehenden Anspruch, **dadurch gekennzeichnet, dass** die Regelmittel (13) mit einem Index indiziert werden, der einer Vorspannung der zweiten elastischen Mittel (20) in einer Arbeitsposition der Regelvorrichtung entspricht.

8. Vorrichtung nach dem voranstehenden Anspruch, **dadurch gekennzeichnet, dass** die Regelmittel (13) so ausgelegt sind, dass sie eine Verringerung der Vorspannung der zweiten elastischen Mittel (20) ermöglichen, um die Vorrichtung in Verschlussposition zu bringen.

9. Vorrichtung nach einem der Ansprüche 6 bis 8, **dadurch gekennzeichnet, dass** die Regelmittel (13) mit einem Index indiziert werden, der einer Verschlussposition der Vorrichtung entspricht, bei der die anhand der zweiten elastischen Mittel ausgeübte Kraft gelockert ist.

10. Vorrichtung nach einem der Ansprüche 1 bis 9, **dadurch gekennzeichnet, dass** sie eine zweite Feder (20) beinhaltet, deren eines Ende auf die Seite der Membran (26) einwirkt, die einem beweglichen Teil (27) gegenüberliegt, das starr mit dem Verschluss (4) verbunden ist und deren anderes Ende an einem verstellbaren Anschlag (18, 19) aufliegt, wobei der Anschlag entlang der Achse des Verschlusses (4) verstellbar ist.

11. Vorrichtung nach dem voranstehenden Anspruch, **dadurch gekennzeichnet, dass** sie ein Handrad (14) beinhaltet, das den verstellbaren Anschlag (18, 19) steuert und eine Arbeitsposition der Regelvorrichtung besitzt, die anhand eines mechanischen Systems indiziert wird.

12. Vorrichtung nach dem voranstehenden Anspruch, **dadurch gekennzeichnet, dass** das Indizierungssystem eine Verschlussposition der Vorrichtung beinhaltet, bei der die anhand der zweiten elastischen Mittel ausgeübte Kraft gelockert ist.

13. Vorrichtung nach einem der Ansprüche 11 und 12, **dadurch gekennzeichnet, dass** das mechanische Indizierungssystem einen Schaltknopf (22, 23) beinhaltet, der in einem im Wesentlichen zylindrischen Teil des Handrads (13) untergebracht ist und in der Lage ist, mit mindestens einer Öffnung des genannten, im Wesentlichen zylindrischen Teil des Handrads (14) zusammenzuwirken.

## Claims

1. Device for regulating pressurized gas, comprising
a body (1) with a passage for connection to pressurized gas;
a shutter (4) movable in translation along an axis and adapted to sealingly cooperate with a seat (5) provided in the passage; a movement of the shutter (4) essentially in the direction of fluid flow corresponding to a movement of closure of the passage; first elastic means (30) exerting a force on the shutter (4) in the direction of closure of the passage;
a low pressure chamber (29) downstream of the seat (5) and the shutter (4), the low pressure chamber (29) being defined by a cavity formed in the body (1) and by a membrane (26) attached the body (1), the membrane (26) being adapted to move according to the pressure in said chamber (29) and to control the shutter (4) thereby regulating in said chamber (29) the flow and/or pressure of the pressurized gas; the first resilient means (30) being housed in the low pressure chamber (29); **characterized in that** the first elastic means (30) are directly supported by the bottom of the cavity of the body (1) defining the lower chamber pressure (29), said bottom being substantially at the level of the seat (5) or at a lower level that is upstream of the seat (5).

2. Device according to one of the preceding claims, **characterized in that** the first elastic means (30) comprises a first spring at least partially surrounding the shutter (4).

3. Device according to the preceding claim, **characterized in that** the first spring (30) is arranged concentrically to the axis of the shutter (4), resting on a lower part of said chamber (29) along the axis of the shutter (4), said lower part being substantially at the level of the seat (5) or at a lower level that is upstream of the seat (5).

4. Device according to one of the preceding claims, **characterized in that** the shutter (4) comprises an elongated portion downstream of the seat (5) in said chamber (29), said elongated portion being threaded and threadedly engaged with a movable part (27) on which the first elastic means (30) acts.

5. Device according to the preceding claim, **characterized in that** it comprises second elastic means (20) acting on the face of the membrane (26) opposite to the movable part (27).

6. Device according to the preceding claim, **characterized in that** it comprises adjusting means (13) of the force exerted by the second elastic means (20).

7. Device according to the preceding claim, **characterized in that** the adjustment means (13) is indexed with an index corresponding to a pre-stress of the second elastic means (20) in a working position of the device.

8. Device according to the preceding claim, **characterized in that** the adjusting means (13) are such that they allow decreasing the pre-stress of the second resilient means (20) so as to close the device.

9. Device according to one of claims 6 to 8, **characterized in that** the adjusting means (13) are indexed with an index corresponding to a closed position of the device where the force exerted by the second elastic means is released.

10. Device according to one of claims 1-9, **characterized in that** it comprises a second spring (20) whose one end is on the face of the membrane (26) opposite to a moving part (27) rigidly linked to the shutter (4) and whose other end bears against an adjustable stop (18, 19), the stop being adjustable by displacement along the axis of the shutter (4).

11. Device according to the preceding claim, **characterized in that** it comprises a hand wheel (14) controlling the adjustable stop (18, 19) and having a working position of the device, said position being indexed using a mechanical system.

12. Device according to the preceding claim, **characterized in that** the indexing system comprises a closed position of the device where the force exerted by the second elastic means is released.

13. Device according to one of Claims 11 and 12 , **characterized in that** the mechanical indexing system comprises a push button (22, 23) accommodated in a substantially cylindrical portion of the hand wheel (13) and adapted to cooperate with at least one opening of the substantially cylindrical portion of said hand wheel (14).
